# EUROPÄISCHE PATENTSCHRIFT

(11) **EP 0 562 168 B1**
(45) Veröffentlichungstag und Bekanntmachung des Hinweises auf die Patenterteilung: **14.03.2001**
(21) Anmeldenummer: 92120085.3
(22) Anmeldetag: 25.11.1992
(51) Int. Cl.: H04L 12/56

(54) **Verfahren zum Routing von Datenpaketen zu Zielknoten in einem Kommunikationsnetz**
Method for routing a data-packet to a destination node in a communications system
Méthode d'acheminement des paquets de données vers un noeud de destination dans un réseau de communication

(30) Priorität: 27.03.1992 DE 4210106
(43) Veröffentlichungstag der Anmeldung: 29.09.1993
(73) Patentinhaber: SIEMENS AKTIENGESELLSCHAFT, 80333 München (DE)
(72) Erfinder: Mersch, Norbert, Dipl.-Ing., W-8000 München 71 (DE); Uhl, Tadeusz, Dr., W-2384 Eggebek (DE)

(56) Entgegenhaltungen:
- ARCHIV FüR ELEKTRONIK UND ÜBERTRAGUNGSTECHNIK Bd. 46, Nr. 2, März 1992, STUTTGART Seiten 93 - 101 , XP291308 MERSCH UND UHL 'Algorithmen für die Bestimmung der schleifenlosen alternativen Wege in speichervermittelnden Netzen.'
- PERFORMANCE OF COMPUTER SYSTEMS. M. ARATO ET AL. (EDS.) IIASA, NORTH-HOLLAND PUBLISHING CO. 1979, Seiten 541 - 546 A. SEGALL 'Failsafe distributed loop-free routing in communication networks.'
- IEEE TRANSACTIONS ON COMPUTERS Bd. 39, Nr. 7, Juli 1990, NEW YORK Seiten 870 - 881 , XP137242 SHIN & CHEN 'Minimal order loop-free routing strategy.'

## Beschreibung

Moderne Kommunikationsnetze, die nach dem Prinzip "store and forward" betrieben werden, gewinnen in den letzten Jahren immer mehr an Bedeutung. Man bezeichnet diese Systeme auch als Rechnernetze (computer network), bzw. Datennetze (data network). Um eine Kompatibilität für diese Kommunikationsnetze zu erreichen, wurde ein logisches Modell für diese Kommunikationssysteme entworfen und in internationalen Empfehlungen (z.B. OSI-Modell von ISO) veröffentlicht.

Die in diesem Modell enthaltenen Vereinbarungen zur Steuerung von Rechnernetzen (im weiteren Protokolle genannt) entscheiden über die Leistungsfähigkeit dieser Netze. Eine sehr wichtige Rolle spielt dabei das sogenannte Routing-Protokoll, welches in der dritten Schicht (Vermittlungsschicht) des OSI-Modells implementiert ist. Ziel des Routing-Protokolls ist es, in einem Rechnernetz den angebotenen Datenverkehr über den jeweils geeignetsten Weg zum gewünschten Ziel zu lenken. Es gibt eine ganze Reihe von Merkmalen, die ein bestimmtes Routingverfahren bzw. Routing-Protokoll charakterisieren. Dadurch ergeben sich viele Realisierungsmöglichkeiten, die zu vielen unterschiedlichen Routingverfahren führen. Einen guten Überblick über die existierenden Routingverfahren findet man in der Zeitschrift "ntz Archiv, Bd. 9, H.12, 1987, S.317-325" mit dem Artikel "Routing-Algorithmen für paketvermittelte Datennetze - ein Beitrag zur Systematik von Liebl, F." (Dokument 1).

Von besonderer Bedeutung für die Praxis sind die adaptiven, verteilten Routingverfahren mit globalen Netzzustandsinformationen. Die Adaptivität dieser Verfahren erfordert einen Austausch der Netzzustandsinformationen zwischen allen Kommunikationsknoten. Dadurch erreicht man eine gute Anpassung an die Last- und Topologieänderungen im Netz.

Ein Nachteil der adaptiven, verteilten Routingverfahren besteht darin, daß eine falsch gewählte Aktualisierungsperiode zur vermehrten Schleifenbildung führt, die die Netzbelastung stark erhöht. Deshalb ist es wichtig, vorhandene Schleifen möglichst schnell zu erkennen und wieder abzubauen. Geschieht das nicht, können die Ressourcen eines Netzbereichs durch wenige Datenblöcke vollständig in Anspruch genommen werden. So entstehen Netzüberlastungen, die im Extremfall zu einem Zusammenbruch des Rechnernetzes führen können.

Für die Behandlung des Problems der Schleifenbildung in Rechnernetzen gibt es grundsätzlich zwei Möglichkeiten. Man kann entweder Verfahren verwenden, in denen grundsätzlich keine Schleifen vorkommen oder eine Schleifenüberwachung benutzen, die zur Erkennung von kreisenden Datenblöcken dient.

Von den prinzipiell schleifenlosen Verfahren ist bisher nur das "Single Path Shortest Route"-Verfahren aus dem Buch "Principles Of Computer Communication Network Design, John Wiley & Sons, New York, 1983, von Seidler, J." (Dokument 2) bekannt. Die Zahl der bekannten Verfahren zur Schleifenüberwachung ist dagegen wesentlich größer.

In der Praxis von Bedeutung sind auch Verfahren, die es ermöglichen, potentielle Routing-Schleifen in fest vorgegebenen, z.B. manuell erstellten Routing-Tabellen zu finden. Diese Verfahren, die im folgenden als Verfahren zur Schleifenerkennung bezeichnet werden, lassen sich in zwei Gruppen einteilen.

Die erste Gruppe dieser Verfahren benutzt das Auftreten von Wegen unendlicher Länge als Kriterium für schleifenbehaftete Routing-Tabellen. Kann man nachweisen, daß alle möglichen Wege in einem Rechnernetz nach dem Durchlaufen einer maximalen Anzahl von Knoten enden, so ist die Routing-Tabelle schleifenlos. Ein Vertreter dieser Gruppe ist in dem Artikel "Mathematisches Modell von Vermittlungsnetzen mit hierarchischem und nichthierarchischem Verbindungsaufbau" von Willie, H. in der Zeitschrift "ntz Archiv", Bd. 4, Heft 5, 1982, S. 127-142 (Dokument 3) näher beschrieben.Das Hauptproblem dieser Verfahren besteht im immensen Aufwand zur Erfassung aller Wege.

Die zweite Gruppe dieser Verfahren zur Schleifenüberwachung benutzt ein Hierarchiekriterium zum Erkennen von Schleifen in den Routing-Tabellen. Hierzu wird die Topologie der Knoten in einer bestimmten Hierarchie angeordnet und überprüft, ob diese Hierarchie bei Durchlaufen der durch die Routing-Tabelle vorgegebenen Wege nicht verletzt wird. Verfahren, die auf diesem Prinzip beruhen, sind durch Chan, W, "Recursive Algorythms for Computing End-to-End Blocking in an Network with Arbitrary Routing Plan, IEEE Trans. on Commun. No. 2, Februar 1980, pp. 153-164" (Dokument 4) und Klein, W."Routing Planning in a Large Signalling Network, Proc. of llth Int. Teletraffic Congress, Turin, Juni 1988, pp. 2.4A.5.1-2.4A.5.9" (Dokument 5) bekannt.

Die beiden genannten Gruppen von Verfahren zur Schleifenerkennung erlauben somit lediglich eine Überprüfung existierender Routing-Tabellen auf Schleifenlosigkeit. Es fehlen bisher Verfahren zum Entwurf von schleifenlosen Routing-Tabellen.

Der Erfindung liegt das Problem zugrunde, ein geeignetes Routing-Verfahren anzugeben, das die Bestimmung von a priori schleifenlosen potentiellen Verkehrswegen in einem Kommunikationsnetz ermöglicht.

Dieses Problem wird durch die Merkmale des Anspruchs 1 gelöst.

Eine weitere Ausführungsform der Erfindung ist durch Anspruch 2 angegeben. Bei dieser Ausführungsform ist der Berechnungsaufwand für das erfindungsgemäße Verfahren stark vermindert, ohne daß eine gegenüber dem Verfahren gemäß Anspruch 1 größere Anzahl von mit potentiellen Verkehrswegen unterversorgten Knoten in Kauf genommen werden muß.

Eine weitere Ausführungsform der Erfindung ist durch Anspruch 3 angegeben. Durch diese Ausführungsform wird der Berechnungsaufwand zur Ermittlung der potentiellen Verkehrswege noch weiter reduziert.

Eine weitere Ausführungsform der Erfindung ist durch Anspruch 4 angegeben. Bei dieser Ausführungsform wird der Berechnungsaufwand zur Ermittlung der potentiellen Verkehrswege durch das eingeschränkte Betrachten von nur horizontalen Teilwegen als potentielle Verkehrswege verringert.

Eine weitere Ausführungsform der Erfindung ist durch Anspruch 5 angegeben. Bei dieser Ausführungsform wird eine nach Durchführung des Verfahrensschritts e) gemäß Anspruch 1 für alle Knoten bereits erfolgte Bestimmung von Teilwegen als potentielle Verkehrswege zugunsten eines unterversorgten Knotens verändert. Als Folge davon müssen bereits als potentielle Verkehrswege bestimmte Teilwege, die nun zu Schleifen führen, nachträglich wieder gestrichen werden. Danach wird der Verfahrensschritt e) gemäß Anspruch 1 wiederholt. Durch diese Ausführungsform wird eine gleichmäßigere Versorgung der Knoten des Netzes mit alternativen potentiellen Verkehrswegen erreicht.

Im folgenden wird die Erfindung anhand der Zeichnung näher erläutert.
FIG 1 zeigt eine spezielle Abbildung der Topologie eines Kommunikationsnetzes auf eine Hierarchiestruktur bezüglich eines bestimmten Zielknotens,
FIG 2 zeigt die Knoten einer Hierarchieebene und deren Verbindungen durch horizontale Teilwege,
FIG 3 zeigt den Ablauf eines iterativen Verfahrens zur Bestimmung der Routing-Tabellen,
FIG 4 zeigt beispielhaft eine mit Hilfe des iterativen Verfahrens gewonnene Routing-Tabelle für eine bestimmte vorgegebene Netztopologie,
FIG 5 zeigt eine Netztopologie, die der Ermittlung der Routing-Tabelle gemäß FIG 4 zugrundeliegt.

Zur Bestimmung schleifenloser Routing-Tabellen wird ein Kriterium benötigt, anhand dessen schleifenverursachende von nichtschleifenverursachenden Routing-Entscheidungen unterschieden werden können. Als ein solches Kriterium eignet sich insbesondere das bereits für Verfahren zur Schleifenerkennung erwähnte Hierarchiekriterium. Die Hierarchie wird jedoch erfindungsgemäß nicht wie bisher der vorhandenen Routing-Tabelle angepaßt, sondern die Routing-Tabelle wird so aufgebaut, daß sie der erwähnten Hierarchien entspricht. Die Erzeugung geeigneter Hierarchien wird im folgenden näher erläutert.

Eine Einordnung der Knoten eines Rechnernetzes in eine Hierarchie bedeutet eine Abbildung der Topologie auf eine Hierarchiestruktur. Die erzeugte Hierarchiestruktur muß entsprechend der Hierarchiebedingung in einer bestimmten Richtung durchlaufen werden, um die Schleifenlosigkeit zu garantieren. Ein Durchlaufen der Hierarchie entspricht aber in der Realität einem Durchlaufen des Rechnernetzes. Dieses sollte immer zu einer Annäherung zu dem Zielknoten führen. Aus diesem Grunde ist es sinnvoll, daß die Hierarchieebenen etwas mit der Nähe zum Zielknoten zu tun haben, also z.B. mit einer bestimmten Weglänge (hop distance) zum Zielknoten assoziiert werden.

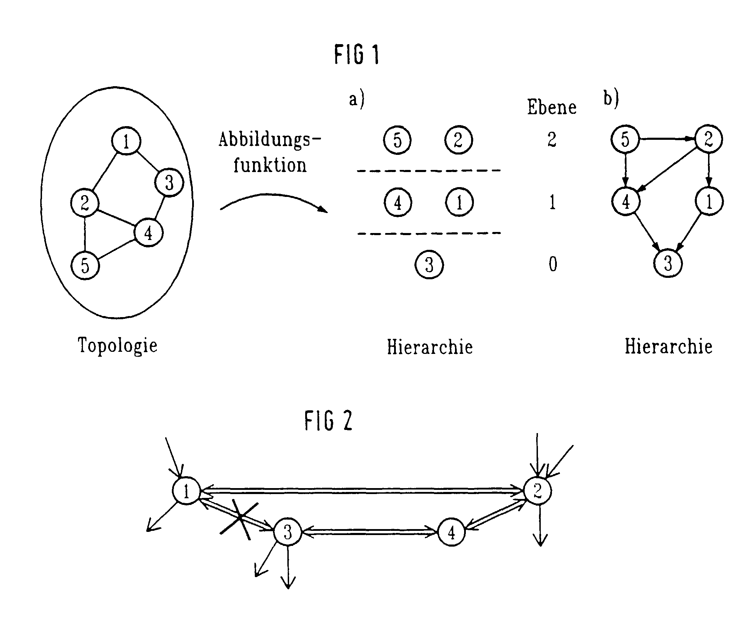

Figur 1 zeigt eine spezielle Abbildung der Topologie eines Kommunikationsnetzes auf eine Hierarchiestruktur bezüglich eines bestimmten Zielknotens. Dabei wurde als Hierarchiekriterium die hop distance (Entfernung zum Zielknoten, gemessen in durchlaufenen Kanälen) verwendet. Wie aus Figur 1 ersichtlich, muß die durch die Hierarchiestruktur erzeugte Rangfolge der Knoten nicht eindeutig sein, so daß es durchaus mehrere Knoten mit gleichem Rang (Knoten in derselben Hierarchieebene) geben kann. Diese Tatsache muß bei der Konstruktion der Routing-Tabelle berücksichtigt werden.

Eine der hop distance entsprechende Hierarchiestruktur kann z.B. sehr effektiv durch den sogenannten inversen Etikettierungs-Algorithmus erzeugt werden, wenn man als Kanallänge (Teillänge) die Länge 1 vorgibt. Der inverse Etikettierungs-Algorithmus ist z.B. aus Dokument 2 bekannt. Es handelt sich dabei um einen iterativen Algorithmus, mit dessen Hilfe jeweils für einen bestimmten Zielknoten die hop distance in den jeweils restlichen Knoten des Rechnernetzes bestimmt werden kann. Wesentliches Merkmal des Algorithmus ist das Etikett. Es wird jedem Knoten zugeordnet und beschreibt die kleinste Entfernung zum Zielknoten, die bisher ermittelt werden konnte. Außerdem ist dort eingetragen, über welchen Nachbarknoten dies möglich war. In einem iterativen Verfahren werden diese Werte für alle Knoten des Netzes optimiert.

Der Etikettierungs-Algorithmus kann also als eine geeignete und anpassungsfähige Abbildungsfunktion zur Erzeugung von Hierarchiestrukturen auf Rechnernetzen angesehen werden. Es sind darüber hinaus auch andere sinnvolle Abbildungsfunktionen zur Erzeugung von Hierarchiestrukturen vorstellbar. Es ist z.B. möglich, die geographische Entfernung der Rechnerknoten zum Zielknoten als Hierarchiekriterium zu verwenden. In diesem Fall kommt man ohne den Etikettierungsalgorithmus aus. Auch bei Verwendung des Etikettierungsalgorithmus gibt es noch eine Vielzahl weiterer möglichen Hierarchiekriterien, z.B. die gesamte Verzögerungszeit bis zum Zielknoten oder die gesamte physikalische Leitungslänge bis zum Zielknoten (entsprechend den Leitungskosten).

Die Abbildung einer Topologie auf eine Hierarchie ist nur der erste Schritt zur Konstruktion schleifenloser Routing-Tabellen. In einem zweiten Verfahrensschritt müssen die potentiellen Verkehrswege bezüglich der jeweils betrachteten Hierarchie, d. h. bezüglich des jeweils betrachteten Zielknotens bestimmt werden, was dem Eintragen dieser potentiellen Verkehrswege in die Routing-Tabellen der Knoten entspricht.

Dieser zweite Verfahrensschritt kann durch eine erweiterte Anwendung der Verfahren der kürzesten Wege, wie z.B. des angegebenen Etikettierungs-Algorithmus, auf alternative Wege erreicht werden. Zur Verdeutlichung dieser Anwendung wird nochmals die Hierarchiestruktur in FIG 1 betrachtet, die durch die Abbildung der Topologie des Kommunikationsnetzes in FIG 1 erzeugt wurde. Durch die Verfahren der kürzesten Wege ist neben der Abbildung der Topologie gleichzeitig pro Knoten genau einer der absteigenden Wege als potentieller Teilweg bekannt. Bestimmt man nun erfindungsgemäß alle absteigenden Wege als potentielle Wege, so wird die Hierarchiebedingung dennoch gewahrt und man gewinnt gleichzeitig einen Zuwachs an alternativen Wegen.

Darüber hinaus können sogar horizontale Wege, d.h. Wege, die innerhalb einer Hierarchieebene liegen, genutzt werden, wenn diese Wege auf Schleifen überprüft werden. Dies kann in einem dritten Verfahrensschritt z.B. gemäß der in Dokument 5 beschriebenen Algorithmen erfolgen.

Dieser Algorithmus ist ein Verfahren zur Schleifenerkennung und benutzt als solcher ebenfalls das Hierarchiekriterium. Wesentliches Merkmal dieses Algorithmus ist es, daß versucht wird, die Netzknoten in Ebenen zu unterteilen, zwischen denen nur absteigende Wege existieren. Gelingt dies, so ist die gegebene Routing-Tabelle schleifenfrei. Bleiben nicht zuteilbare Netzknoten übrig, so enthält diese Restmenge mindestens eine Schleife.

Zusammenfassend läßt sich das Verfahren für die Bestimmung schleifenloser Routing-Tabellen mit alternativen Wegen, unter denen auch horizontale Wege zugelassen werden, in drei Schritten darstellen, nämlich einem ersten Verfahrensschritt, bei dem eine Hierarchiestruktur mit einem geeigneten Algorithmus erzeugt wird, einem zweiten Verfahrensschritt, durch den alle in der Hierarchiestruktur absteigenden Wege als potentielle Verkehrswege bestimmt werden und einen dritten Verfahrensschritt, durch den horizontale Wege unter Überprüfung auf Schleifen als potentielle Verkehrswege bestimmt werden.

Die genannten drei Verfahrensschritte müssen für jeden Zielknoten des Kommunikationsnetzes durchgeführt werden. Für jeden Zielknoten ergibt sich also eine eigene Hierarchiestruktur.

Bei zwei Knoten, die durch zwei horizontale Teilwege entgegengesetzter Richtung miteinander verbunden sind, kann durch die Auswahl dieser horizontalen Teilwege als potentielle Verkehrswege der Fall eintreten, daß die Datenblöcke zwischen den zwei benachbarten Knoten hin- und her pendeln. Diese spezielle Schleife wird auch als Ping-Pong-Schleife bezeichnet.

Bei einem Routing-Verfahren, bei dem sogenannte lokale Zusatzinformationen ausgewertet werden, die beim Empfang eines Datenblocks erzeugt werden (z.B. Informationen über den benutzten Empfangskanal), kann das Auftreten einer Ping-Pong-Schleife durch eine entsprechende Routing-Entscheidung, die die genannte Zusatzinformation berücksichtigt, verhindert werden. Daher braucht bei einem solchen Routing-Verfahren auf die Vermeidung von Ping-Pong-Schleifen bei der Bestimmung von horizontalen Teilwegen als potentiellen Verkehrswegen nicht geachtet zu werden und es können somit horizontale Teilwege in beiden Richtungen als potentielle Verkehrswege in Betracht gezogen werden.

Der dritte Verfahrensschritt kann zum einen dadurch geschehen, daß die horizontalen Teilwege einzeln in Betracht gezogen werden (vorläufige Bestimmung eines horizontalen Teilweges als potentieller Verkehrsweg) und jeweils sofort überprüft wird, ob durch den vorläufig bestimmten potentiellen Verkehrsweg eine Schleife erzeugt wird, oder zum anderen dadurch, daß die horizontalen Teilwege gemeinsam in Betracht gezogen werden (alle horizontalen Teilwege einer Hierarchieebene werden gemeinsam als vorläufige potentielle Verkehrswege bestimmt) und aufgrund einer nachher erfolgten Überprüfung auf Schleifen einzelne, vorläufig als potentielle Verkehrswege bestimmte Teilwege nachträglich wieder ausgeschlossen werden.

Wenn bei der gemeinsamen Betrachtung der Teilwege einer bestimmten Hierarchieebene anhand des Schleifenerkennungsalgorithmus eine größere Schleife (beteiligte Knotenanzahl größer 2) festgestellt wird, muß eine Auswahl aus den in Betracht gezogenen Teilwegen erfolgen, die sicherstellt, daß durch die ausgewählten Teilwege, d.h. die endgültig bestimmten potentiellen Verkehrswege, keine Schleife entstehen kann.

Im folgenden wird ein mögliches Verfahren zur Auflösung einer festgestellten Schleife näher erläutert.

Figur 2 zeigt die Knoten einer Hierarchieebene und deren Verbindungen durch Teilwege. Werden in Figur 2 alle Teilwege der dargestellten Hierarchieebene in Betracht gezogen, so ergibt sich eine Schleife mit einer beteiligten Knotenzahl größer 2. Um die dargestellte Schleife aufzulösen, bleibt nur die Möglichkeit, die bidirektionale Verbindung an einer Stelle aufzutrennen. Bei der Auswahl der aufzutrennenden Verbindung kann in folgenden Schritten vorgegangen werden:
In einem ersten Schritt wird derjenige Knoten der betreffenden Hierarchieebene bestimmt, der die meisten alternativen Sendekanäle (Ausgangskanäle) in der Schleife besitzt. In einem zweiten Schritt wird derjenige Nachbarknoten des gemäß dem ersten Schritt gefundenen Knotens bestimmt, der ebenfalls die größte Anzahl von alternativen Sendekanälen besitzt.
In einem dritten Schritt wird schließlich die Verbindung zwischen dem gemäß dem ersten und zweiten Schritt gefundenen Knotenpaar herausgelöst, d.h. die zu dieser Verbindung gehörenden Teilwege werden nicht als potentielle Verkehrswege bestimmt bzw. ausgewählt.

Durch das Fehlen der nicht als potentielle Verkehrswege ausgewählten Teilwege der herausgelösten Verbindung gemäß dem vorhergenannten Verfahren wird die Wahlmöglichkeit an potentiellen Verkehrswegen in den Knoten der Hierarchieebene am wenigsten beeinträchtigt.

In dem Beispiel aus Figur 2 besitzt der Knoten 3 die meisten alternativen Sendekanäle (Summe der abgehenden Teile = 4). Der Knoten 1 ist derjenige Knoten des Knotens 3, der die meisten alternativen Sendekanäle besitzt (Summe der abgehenden Teile = 3). In diesem Fall wird also die Verbindung (1,3) von der Schleife entfernt (siehe das Kreuz in Figur 2).

Obwohl das oben beschriebene Verfahren bereits sehr viele alternative Wege ermittelt, kann es dennoch vorkommen, daß sich für manche Knoten keine alternativen potentiellen Verkehrswege ergeben. Eine Weiterentwicklung des erfindunsgemäßen Verfahrens zielt deshalb darauf ab, sich teilweise von der vorgegebenen Hierarchie zu lösen, um auch für diese Knoten Alternativwege, d.h. mehr als einen einzigen potentiellen Verkehrsweg zu schaffen. Die Einbeziehung hierarchieverletzender Wege zur Optimierung der Routing-Tabellen wird im folgenden näher erläutert. Alternativwege für unterversorgte Knoten mit höchstens einem potentiellen Verkehrsweg können auch in der darüberliegenden Hierarchieebene gefunden werden.

Das Auffinden neuer Wege als potentielle Verkehrswege hängt auch von den bisherigen Bestimmungen der Teilwege als potentielle Verkehrswege (d.h. bisherigen Einträgen in Routing-Tabellen) ab. Deshalb kann es sein, daß sich neue Alternativwege erst dadurch ergeben, daß an anderer Stelle, d.h. in einer Routing-Tabelle für einen anderen Knoten, ein Routing-Eintrag erfolgt ist. Um diese Möglichkeiten optimal nutzen zu können, ist ein iteratives Vorgehen nötig, welches im folgenden näher beschrieben wird.

Das genannte iterative Verfahren zum Ausfüllen der Routing-Tabellen vollzieht sich in zwei Iterationsschleifen. In der inneren Schleife wird für alle diejenigen Knoten, deren Auswahl bisher auf weniger als zwei potentielle Verkehrswege beschränkt war, nach einem nicht absteigenden Alternativweg gesucht. Als Alternativweg wird jedoch ein Nachbarknoten nur dann zugelassen, d.h. in die Routing-Tabelle eingetragen, wenn dieser Nachbarknoten bereits selber einen Alternativweg besitzt und dieser nicht zu Schleifen führt. Falls mehrere solcher Nachbarknoten existieren, wird derjenige Nachbarknoten mit der geringsten hop distance ausgewählt. Falls wiederum mehr als ein solcher Nachbarknoten mit der geringsten hop distance existiert, wird derjenige mit den meisten Alternativwegen ausgewählt.

Ist die Liste der Knoten komplett durchlaufen, wird erneut mit der Suche begonnen. Erst wenn sich keine Veränderungen der Routing-Tabellen mehr ergeben, wird die innere Iterationsschleife verlassen.

In der äußeren Iterationsschleife werden nun die bestehenden Routing-Tabellen in zwei Schritten verändert. Zunächst wird in einem ersten Schritt demjenigen Knoten mit der geringsten hop distance zu einem betrachteten Zielknoten und maximal einem Eintrag in seiner Routing-Tabelle (maximal ein potentieller Verkehrsweg) derjenige Nachbarknoten mit der ebenfalls geringsten hop distance zugeordnet, der noch nicht in der Routing-Tabelle des genannten Knotens eingetragen ist. Da dieser potentielle Verkehrsweg bei vorherigen Schleifenüberprüfungen nicht berücksichtigt werden konnte, ist mit Sicherheit eine Schleife entstanden. Deshalb müssen in einem zweiten Schritt diejenigen Einträge, die zur Schleifenbildung führen, entfernt werden.

Beginnend mit dem ausgewählten Nachbarknoten werden alle Wege verfolgt, die von diesen Nachbarknoten zum Zielknoten führen. Immer, wenn sich auf diesen Wegen eine Schleife ergibt, wird in demjenigen Knoten, in dem auf einen bezüglich des Zielknotens nicht absteigenden Alternativweg umgelenkt wurde, dieser Alternativweg entfernt. Diesem Verfahren liegt die Erkenntnis zugrunde, daß durch absteigende Wege keine Schleifen entstehen können. Danach wird erneut die innere Iterationsschleife durchlaufen.

Die äußere Iterationsschleife kann erst dann wieder verlassen werden, wenn nur noch Knoten mit mindestens einem Alternativweg vorhanden sind.

Die Konvergenz der inneren Iterationsschleife ist dadurch gesichert, daß die Zahl der möglichen Routing-Einträge begrenzt ist. Die Konvergenz der äußeren Iterationsschleife ist jedoch schon deshalb nicht gewährleistet, da nicht mit Sicherheit gesagt werden kann, ob überhaupt für alle Topologien Routing-Tabellen gemäß dem genannten Verfahren ermittelt werden können, bei denen kein Knoten weniger als einen Alternativweg besitzt. Deshalb muß für diese äußere Iterationsschleife ein zusätzliches Abbruchkriterium vorgesehen werden.

Nach Ausschöpfung dieser Möglichkeiten kann das genannte iterative Verfahren für die Suche nach zweiten und dritten Alternativwegen ausgedehnt werden. Um eine möglichst gleichmäßige Verteilung der Alternativwege zu erreichen, kann eine Obergrenze eingeführt werden, die garantiert, daß in denjenigen Knoten mit besonders vielen Nachbarknoten nur ein bestimmter Anteil der Alternativwege ausgeschöpft wird. Um das Berechnungsverfahren abzukürzen, kann noch ein zusätzlicher Berechnungsschritt an den Anfang des iterativen Verfahrens gestellt werden, bei dem allen denjenigen Knoten, die nur zwei Sendekanäle (Ausgangskanäle) besitzen, definitiv die beiden Sendekanäle als potentielle Verkehrswege zugeordnet werden.

Um das Berechnungsverfahren abzukürzen, kann außerdem die Suche von Alternativwegen in der inneren Iterationsschleife auf horizontale Teilwege beschränkt werden.

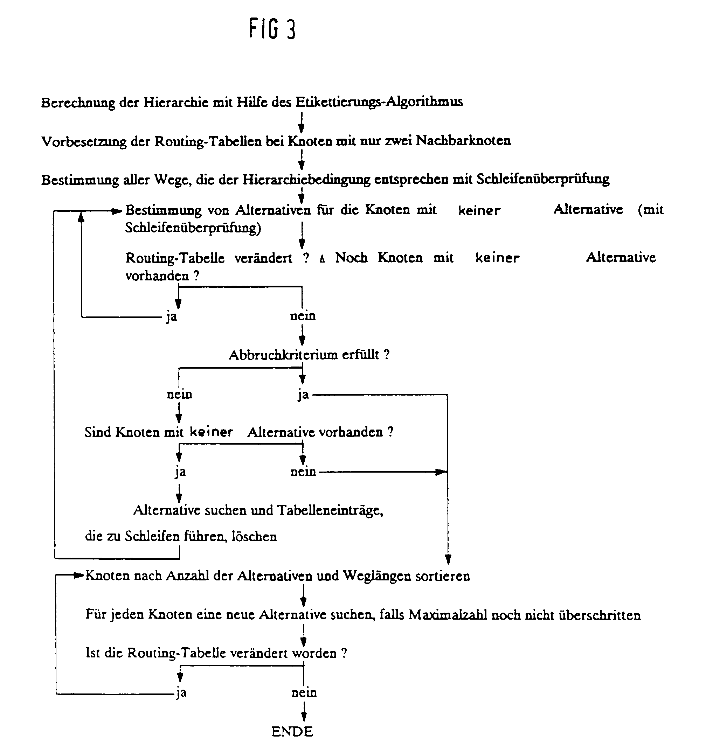

Figur 3 zeigt den Ablauf des genannten Verfahrens zur Bestimmung der Routing-Tabellen mit seinen Iterationsschleifen.

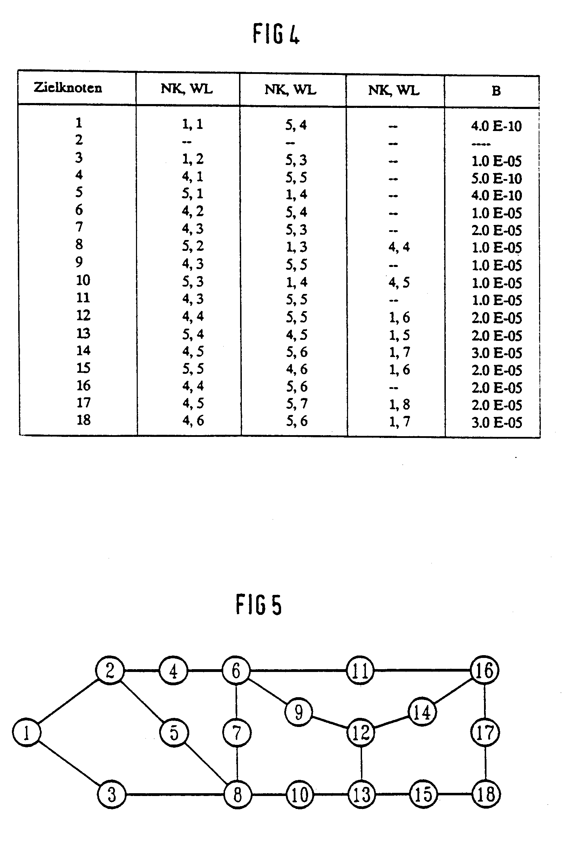

FIG 4 zeigt eine für den Netzknoten 2 der Netztopologie gemäß FIG 5 mit Hilfe des erfindungsgemäßen Verfahrens gewonnene Routing-Tabelle. In dieser Routing-Tabelle ist jedem Zielknoten eine eigene Zeile zugeordnet, in der die nach dem erfindungsgemäßen Verfahren ermittelten potentiellen Verkehrswege in Richtung Zielknoten eingetragen sind. Ein potentieller Verkehrsweg ist dabei jeweils durch die Angabe eines Nachbarknotens NK und einer Gesamtweglänge WL zwischen dem Netzknoten 2 und dem jeweiligen Zielknoten bestimmt. Außerdem ist in FIG 4 für jeden Zielknoten eine Blockierungswahrscheinlichkeit B angegeben, die ein Maß für die Wahrscheinlichkeit der Nichterreichbarkeit eines Zielknotenes darstellt und kein Bestandteil der in FIG 4 dargestellten Routing-Tabelle ist. Die Ermittlung der genannten Blockierungswahrscheinlichkeit basiert auf einer angenommenen Ausfallwahrscheinlichkeit eines Teilweges des Netzes von 1.0 E-10 und einem angenommenen Routing-Verfahren, bei dem die Routing-Entscheidung dezentral, d.h. erst im jeweiligen Transitknoten getroffen wird.

FIG 5 zeigt eine spezielle Netztopologie, die der Ermittlung der Routing-Tabelle gemäß FIG 4 zugrundeliegt.

## Patentansprüche

1. Verfahren zum Routing von Datenpaketen zu Zielknoten in einem Kommunikationsnetz, demgemäß
a) in jedem Knoten des Kommunikationsnetzes bezüglich eines jeweiligen Zielknotens bestimmte der zu Nachbarknoten führenden Teilwege als potentielle Verkehrswege zum Routing der Datenpakete benützt werden,
b) in jedem Knoten aus den genannten potentiellen Verkehrswegen für die empfangenen Datenpakete jeweils ein tatsächlicher Verkehrsweg ausgewählt wird,
**dadurch gekennzeichnet,**
daß die potentiellen Verkehrswege ermittelt werden, indem
c) die Topologie des Kommunikationsnetzes in jeweils eine Hierarchiestruktur bezüglich jedes Zielknotens abgebildet wird,
d) als potentielle Verkehrswege zunächst alle in den Hierarchiestrukturen bezüglich der Zielknoten absteigenden Teilwege bestimmt werden,
e) als potentielle Verkehrswege sodann auch nicht absteigende Teilwege jeweils einzeln in Betracht gezogen werden, jedoch nur dann als potentielle Verkehrswege bestimmt werden, wenn sich dadurch auf den Gesamtwegen der Datenpakete von den Ursprungsknoten zu den Zielknoten keine Schleifen ergeben können.

2. Verfahren gemäß Anspruch 1,
**dadurch gekennzeichnet,**
daß die Ermittlung potentieller Verkehrswege aus nicht absteigenden Teilwegen nur bei solchen Knoten erfolgt, für die nach Durchführung des Verfahrensschritts d) gemäß Anspruch 1 bezüglich eines bestimmten Zielknotens noch weniger als eine vorgegebene Anzahl von potentiellen Verkehrswegen bestimmt ist.

3. Verfahren gemäß Anspruch 2,
**dadurch gekennzeichnet,**
daß ein in Betracht gezogener nicht absteigender Teilweg zu einem Nachbarknoten in einer weiteren Bedingung nur dann als potentieller Verkehrsweg bestimmt wird, wenn für den genannten Nachbarknoten bezüglich desselben Zielknotens bereits mindestens eine vorgegebene Anzahl von potentiellen Verkehrswegen bestimmt ist.

4. Verfahren gemäß einem der Ansprüche 1 bis 3,
**dadurch gekennzeichnet,**
daß unter den nicht absteigenden Teilwegen nur horizontale Teilwege als potentielle Verkehrswege in Betracht gezogen werden.

5. Verfahren gemäß einem der Ansprüche 2 bis 4,
**dadurch gekennzeichnet**,
daß
a) nach Durchführung des Verfahrensschritts e) gemäß Anspruch 1 derjenige Knoten ermittelt wird, dem bezüglich eines bestimmten Zielknotens noch immer weniger als eine vorgegebene Anzahl von potentiellen Verkehrswegen zugeordnet ist und der zugleich im Falle mehrerer solcher Knoten unter diesen die geringste hop distance aufweist,
b) daraufhin für diesen Knoten ein Nachbarknoten ermittelt wird, der unter den Nachbarknknoten die geringste hop distance aufweist,
c) der von dem Knoten zu dem ermittelten Nachbarknoten führende Teilweg als potentieller Verkehrsweg bestimmt wird,
d) die von dem ermittelten Nachbarknoten zum Zielknoten führenden potentiellen Verkehrswege verfolgt werden, und jedesmal wenn dabei eine Schleife erkannt wird, ein an der Schleife beteiligter potentieller Verkehrsweg, der nicht absteigend ist, nachträglich wieder gestrichen wird,
e) sodann der Verfahrensschritt e) gemäß Anspruch 1 wiederholt wird, und
f) die Verfahrensschritte a) bis e) für eine vorgegebene Anzahl von Durchläufen wiederholt werden.

6. Verfahren gemäß einem der Ansprüche 1 bis 5,
**dadurch gekennzeichnet,**
daß die Topologie des Kommunikationsnetzes in eine Hierarchiestruktur abgebildet wird, indem
a) für jeden Knoten derjenige Nachbarknoten ermittelt wird, über den die Gesamtweglänge (Verzögerung) zu einem betrachteten Zielknoten am kleinsten ist,
b) anhand der somit zu den Knoten bekannten Nachbarknoten und Verzögerungen dieser Knoten zu den betrachteten Zielknoten eine Hierarchiestruktur aufgebaut wird.

7. Verfahren gemäß einem der Ansprüche 1 bis 6,
**dadurch gekennzeichnet,**
daß
a) ein nicht absteigender Teilweg auch dann als potentieller Verkehrsweg bestimmt wird, wenn sich dadurch Ping-Pong-Schleifen ergeben können,
b) bei der Auswahl eines tatsächlichen Verkehrsweges anhand von Zusatzinformationen derjenige Teilweg, über den das zu routende Datenpaket empfangen wurde, ausgeschlossen wird.

## Claims

1. Method for routing data packets to destination nodes in a communication network, according to which
a) at each node of the communication network, particular path sections, determined with respect to a particular destination node, among the path sections leading to neighbouring nodes are used as potential traffic channels for routing the data packets,
b) at each node, one actual traffic channel is selected in each case from the aforementioned potential traffic channels for the data packets received,
characterized
in that the potential traffic channels are ascertained by
c) mapping the topology of the communication network to a respective hierarchical structure for each destination node,
d) first determining all the path sections descending in the hierarchical structures for the destination nodes, as potential traffic channels,
e) then also considering respective individual non-descending path sections as potential traffic channels, but determining them as potential traffic channels only if this means that no loops can arise on the data packets' overall paths from the origin nodes to the destination nodes.

2. Method according to Claim 1,
characterized
in that potential traffic channels are ascertained from non-descending path sections only at those nodes for which, after method step d) from Claim 1 has been carried out, there are still fewer than a prescribed number of potential traffic channels for a particular destination node.

3. Method according to Claim 2,
characterized
in that, in a further condition, a considered non-descending path section to a neighbouring node is determined as a potential traffic channel only if at least one prescribed number of potential traffic channels has already been determined for the aforementioned neighbouring node with regard to the same destination node.

4. Method according to one of Claims 1 to 3,
characterized
in that, among the non-descending path sections, only horizontal path sections are considered as potential traffic channels.

5. Method according to one of Claims 2 to 4,
characterized
in that
a) after method step e) from Claim 1 has been carried out, that node is ascertained which still has fewer than a prescribed number of potential traffic channels associated with it for a particular destination node and which, in the case of a plurality of such nodes, at the same time has the shortest hop distance among these nodes,
b) a neighbouring node having the shortest hop distance among the neighbouring nodes is then ascertained for this node,
c) the path section leading from the node to the ascertained neighbouring node is determined as a potential traffic channel,
d) the potential traffic channels leading from the ascertained neighbouring node to the destination node are tracked and, each time a loop is detected in this context, a potential traffic channel, which is non-descending, involved in the loop is subsequently cancelled again,
e) method step e) from Claim 1 is then repeated, and
f) method steps a) to e) are repeated for a prescribed number of passes.

6. Method according to one of Claims 1 to 5,
characterized
in that the topology of the communication network is mapped to a hierarchical structure by
a) ascertaining for each node that neighbouring node via which the total path length (delay) to a destination node under consideration is the shortest,
b) constructing a hierarchical structure using the neighbouring nodes thus known for the nodes and the delays for these nodes with respect to the destination nodes under consideration.

7. Method according to one of Claims 1 to 6,
characterized
in that
a) a non-descending path section is determined as a potential traffic channel even if ping-pong loops may arise as a result,
b) additional information is used to rule out from the selection of an actual traffic channel that path section via which the data packet to be routed was received.

## Revendications

1. Procédé pour l'acheminement de paquets de données vers des noeuds de destination dans un réseau de communication, dans lequel
a) dans chaque noeud du réseau de communication et par rapport à un noeud de destination respectif, on exploite certains des chemins partiels conduisant à des noeuds voisins comme chemins de trafic potentiels pour l'acheminement des paquets,
b) dans chaque noeud, on sélectionne parmi lesdits chemins de trafic potentiels pour les paquets de données reçus à chaque fois un chemin de trafic réel,
caractérisé par le fait qu'on détermine les chemins de trafic potentiels
c) en projetant la topologie du réseau de communication à chaque fois en une structure hiérarchique par rapport à chaque noeud de destination,
d) en déterminant d'abord comme chemins de trafic potentiels tous les chemins partiels descendants dans les structures hiérarchiques par rapport aux noeuds de destination,
e) en considérant alors aussi à chaque fois individuellement des chemins partiels non descendants comme chemins de trafic potentiels mais en ne les déterminant comme chemins de trafic potentiels que si aucune boucle ne peut alors se former sur les chemins globaux des paquets de données des noeuds d'origine aux noeuds de destination.

2. Procédé selon la revendication 1,
caractérisé par le fait qu'on n'effectue la détermination de chemins de trafic potentiels que pour des noeuds pour lesquels, après l'étape de procédé d) selon la revendication 1 par rapport à un certain noeud de destination, il n'est encore déterminé que moins d'un nombre prescrit de chemins de trafic potentiels.

3. Procédé selon la revendication 2,
caractérisé par le fait que, dans une autre condition, on ne détermine un chemin partiel non descendant et considéré vers un noeud voisin comme chemin de trafic potentiel que si, pour ledit noeud voisin et par rapport au même noeud de destination, au moins un nombre prescrit de chemins de trafic potentiels est déjà déterminé.

4. Procédé selon l'une des revendications 1 à 3,
caractérisé par le fait que parmi les chemins partiels non descendants, on ne considère comme chemins de trafic potentiels que des chemins partiels horizontaux.

5. Procédé selon l'une des revendications 2 à 4,
caractérisé par le fait que
a) après l'exécution de l'étape de procédé e) selon la revendication 1, on détermine le noeud auquel n'est toujours associé par rapport à un certain noeud de destination que moins d'un nombre prescrit de chemins de trafic potentiels et qui a en même temps, en présence de plusieurs noeuds de ce type, la plus petite hop distance,
b) on détermine ensuite pour ce noeud un noeud voisin qui, parmi les noeuds voisins, a la plus petite hop distance,
c) on détermine comme chemin de trafic potentiel le chemin partiel qui conduit du noeud au noeud voisin déterminé,
d) on suit les chemins de trafic potentiels conduisant du noeud voisin déterminé au noeud de destination et, à chaque fois qu'on détecte alors une boucle, on supprime de nouveau après coup un chemin de trafic potentiel qui est concerné par la boucle et qui n'est pas descendant,
e) on répète ensuite l'étape de procédé e) selon la revendication 1, et
f) on répète les étapes de procédés a) à e) pour un nombre prescrit de passes.

6. Procédé selon l'une des revendications 1 à 5,
caractérisé par le fait qu'on projette la topologie du réseau de communication dans une structure hiérarchique
a) en déterminant pour chaque noeud le noeud voisin par l'intermédiaire duquel la longueur de chemin totale (retard) jusqu'à un noeud de destination considéré est la plus petite,
b) en construisant une structure hiérarchique à l'aide des noeuds voisins ainsi connus de ces noeuds et à l'aide des retards de ces noeuds aux noeuds de destination considérés.

7. Procédé selon l'une des revendications 1 à 6,
caractérisé par le fait que
a) on détermine comme chemin de trafic potentiel un chemin partiel non descendant même si des boucles ping-pong peuvent ainsi se former,
b) lors de la sélection d'un chemin de trafic réel, on exclut à l'aide d'informations supplémentaires le chemin partiel par l'intermédiaire duquel le paquet de données à acheminer a été reçu.
